# EUROPEAN PATENT SPECIFICATION

(11) **EP 1 717 474 B1**
(45) Date of publication and mention of the grant of the patent: **13.05.2009**
(21) Application number: 04712688.3
(22) Date of filing: 19.02.2004
(51) Int. Cl.: F16D 65/00, B66B 11/08

(54) **BRAKE DEVICE AND HOIST FOR ELEVATOR**
BREMSVORRICHTUNG UND WINDE FÜR AUFZUG
DISPOSITIF DE FREINAGE ET DE LEVAGE POUR ASCENSEUR

(43) Date of publication of application: 02.11.2006
(73) Proprietor: MITSUBISHI DENKI KABUSHIKI KAISHA, Chiyoda-ku, Tokyo 100-8310 (JP)
(72) Inventor: KITAZAWA, Tadashi c/o Inaryo Technica Co., Ltd., Inazawa-shi, Aichi 492-8161 (JP); NAKAMURA, Kazuaki c/o Mitsubishi Denki Kabushiki Kaisha, Chiyoda-ku, Tokyo 100-8310 (JP)
(74) Representative: HOFFMANN EITLE
(86) International application number: PCT/JP2004/001886
(87) International publication number: WO 2005/080818

(56) References cited:
- EP-A- 0 796 814
- WO-A-03/062115
- GB-A- 2 236 623
- JP-A- 3 501 288
- JP-A- 50 078 767
- JP-A- 53 102 465

## Description

### Technical Field

The present invention relates to a brake device provided in, for example, an elevator hoisting machine or the like, and to an elevator hoisting machine.

### Background Art

Disclosed in JP 11-49460 A, for example, is a conventional brake device with which a brake disc rotated integrally with a rotary shaft of an elevator hoisting machine is sandwiched between a pair of brake shoes to thereby brake the rotation of the brake disk and the rotary shaft.

In such a brake device, the wear of the brake shoes is periodically inspected.

In this regard, however, the elevator hoisting machine is arranged within a narrow space at the bottom or top portion of a hoistway, with the result that the brake device is often arranged at a position not readily accessible to a worker, leading to a reduction in the work efficiency of maintenance and inspection work.

EP-A-0 796 814 discloses a brake for a hoist gear, the brake comprising a fitting member that is integrally formed with a bearing. The bearing supports a rotary member and is securely fixed to a base with bolts. A brake main body is mounted to the fitting member.

GB-A-2 236 623 discloses an electromagnetic disk brake for an elevator lifting apparatus, the brake comprising a braking body, a brake disc and an iron core serving as a brake main body. The braking body is securely fixed to a base with bolts, retaining it in a predetermined position. The brake disc is spline-coupled to a rotational shaft of the lifting apparatus.

### Disclosure of the Invention

The present invention has been made to overcome the problem as described above, and therefore it is an object of the present invention to provide a brake device capable of improving the work efficiency of maintenance and inspection work.

To this end, according to one aspect of the present invention, there is provided a brake device for braking rotation of a rotary member that is rotatably supported to a support portion, comprising: a brake mounting member that is rotatable about a rotation center of the rotary member; a fixing member for fixing the brake mounting member to the support portion and regulating rotation of the brake mounting member; and a brake device main body mounted to the brake mounting member and adapted to brake the rotation of the rotary member, wherein the brake device main body is rotationally displaceable for inspection.

According to another aspect of the present invention, there is provided an elevator hoisting machine comprising: a hoisting machine main body including a motor portion; a rotary member including a drive sheave and rotated by a drive force of the motor portion; a brake device having a brake device main body, the brake device main body being capable of rotational displacement about a rotation center of the rotary member with respect to the hoisting machine main body and adapted to brake rotation of the rotary member; and a fixing member for regulating the rotational displacement of the brake device main body with respect to the hoisting machine main body, wherein the brake device main body is rotationally displaceable for inspection.

### Brief Description of the Drawings

Fig. 1 is a schematic side view showing an elevator apparatus according to Embodiment 1 of the present invention;
Fig. 2 is a side view showing an elevator hoisting machine of Fig. 1;
Fig. 3 is a sectional view showing a brake device of Fig. 2;
Fig. 4 is a front view showing the brake device of Fig. 2;
Fig. 5 is a sectional view showing a state in which fixing bolts of Fig. 3 are removed;
Fig. 6 is a front view showing a state in which a brake device main body of Fig. 4 undergoes rotational displacement;
Fig. 7 is a front view showing how maintenance and inspection work is performed on the brake device of Fig. 2;
Fig. 8 is a schematic side view showing an elevator apparatus according to Embodiment 2 of the present invention;
Fig. 9 is a front view showing how maintenance and inspection work is performed on a brake device of Fig. 8; and
Fig. 10 is a sectional view of a brake device according to Embodiment 3 of the present invention.

### Best Mode for carrying out the Invention

Hereinbelow, preferred embodiments of the present invention are described with reference to the drawings.

### Embodiment 1

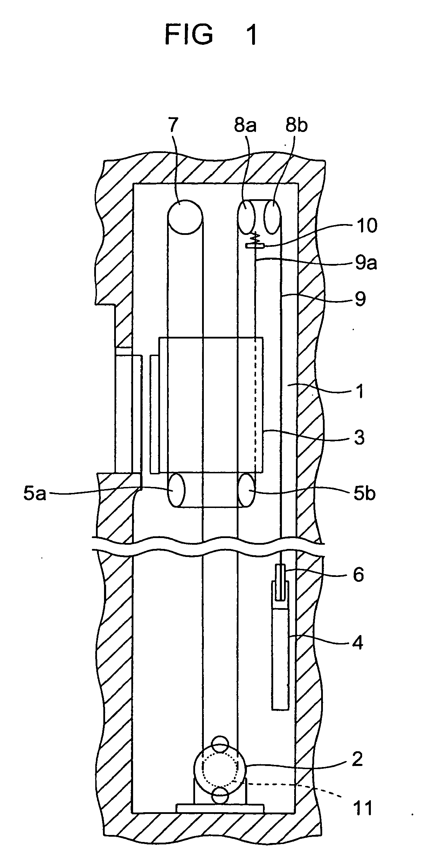

Fig. 1 is a schematic side view showing an elevator apparatus (machine room-less elevator apparatus) according to Embodiment 1 of the present invention. Referring to the figure, an elevator hoisting machine 2 is provided at a bottom portion (pit) of the hoistway 1. A car 3 and a counterweight 4 are raised and lowered in the hoistway 1 by the drive force of the elevator hoisting machine 2.

Provided under the car 3 are a pair of car suspension sheaves 5a, 5b. A counterweight suspension sheave 6 is provided above the counterweight 4. Provided at a top portion of the hoistway 1 are a car-side return pulley 7 and a pair of counterweight-side return pulleys 8a, 8b.

The car 3 and the counterweight 4 are suspended in the hoistway 1 by a plurality of main ropes 9 (of which only one is shown in the figure). A rope-end connecting portion 10 is fixed to a top portion of the hoistway 1. Each main rope 9 has a first end portion 9a connected to the rope-end connecting portion 10, and a second end portion (not shown).

The elevator hoisting machine 2 has a drive sheave 11 around which the main ropes 9 are wound. The main ropes 9 are wound around the car suspension sheave 5b, the car suspension sheave 5a, the car-side return pulley 7, the drive sheave 11, the counterweight-side return pulley 8a, the counterweight-side return pulley 8b, and the counterweight suspension sheave 6 in the stated order from the first end portion 9a side. That is, the car 3 and the counterweight 4 are suspended by the main ropes 9 according to a 2: 1 roping system.

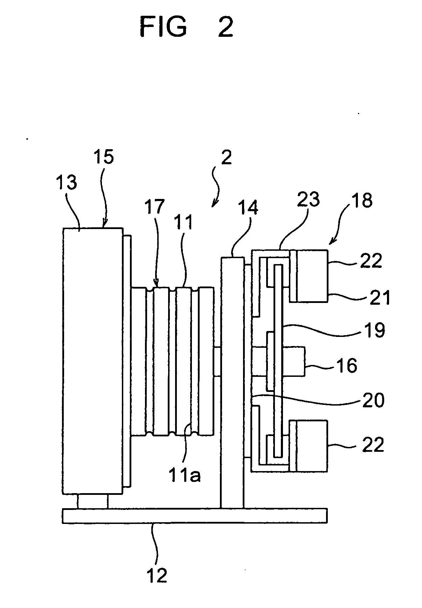

Fig. 2 is a side view showing the elevator hoisting machine of Fig. 1. The elevator hoisting machine 2 is arranged such that the rotary shaft of the drive sheave 11 becomes horizontal. A motor portion 13 and a bearing stand 14 that serves as a support portion are fixed to a base 12 fixed on the floor surface at the bottom portion of the hoistway 1. A hoisting machine main body 15 has the base 12, the motor portion 13, and the bearing stand 14.

Provided in an outer peripheral portion of the drive sheave 11 are a plurality of rope grooves 11a in which the main ropes 9 are inserted. The drive sheave 11 is fixed to a main shaft 16. A rotary member 17 having the drive sheave 11 and the main shaft 16 is rotatably supported by the motor portion 13 and the bearing stand 14. Further, the rotary member 17 is rotated by the drive force of the motor portion 13 about the axis of the main shaft 16 as the rotation center.

Mounted to the bearing stand 14 is a brake device 18 for braking the rotation of the rotary member 17. The brake device 18 has a brake disc 19 fixed to the main shaft 16 and rotating integrally with the main shaft 16, a brake mounting member 20 mounted to the bearing stand 14, and a brake device main body 21 mounted to the brake mounting member 20 and adapted to brake the rotation of the rotary member 17 through the intermediation of the brake disc 19.

The brake device main body 21 has a plurality of (in this example, two) brake units 22 that are arranged symmetrical to each other about the rotation center of the rotary member 17. Each brake unit 22 is mounted to the brake mounting member 20 through the intermediation of a bracket 23.

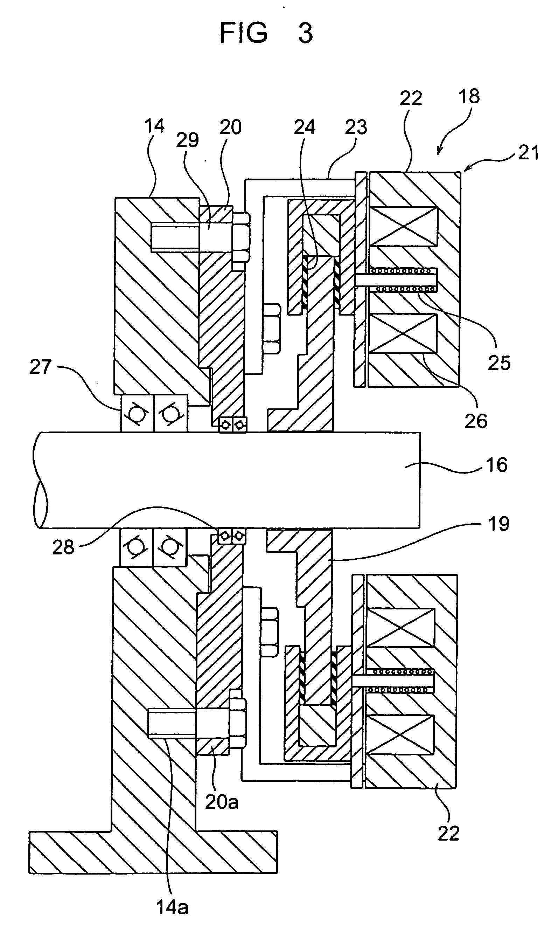

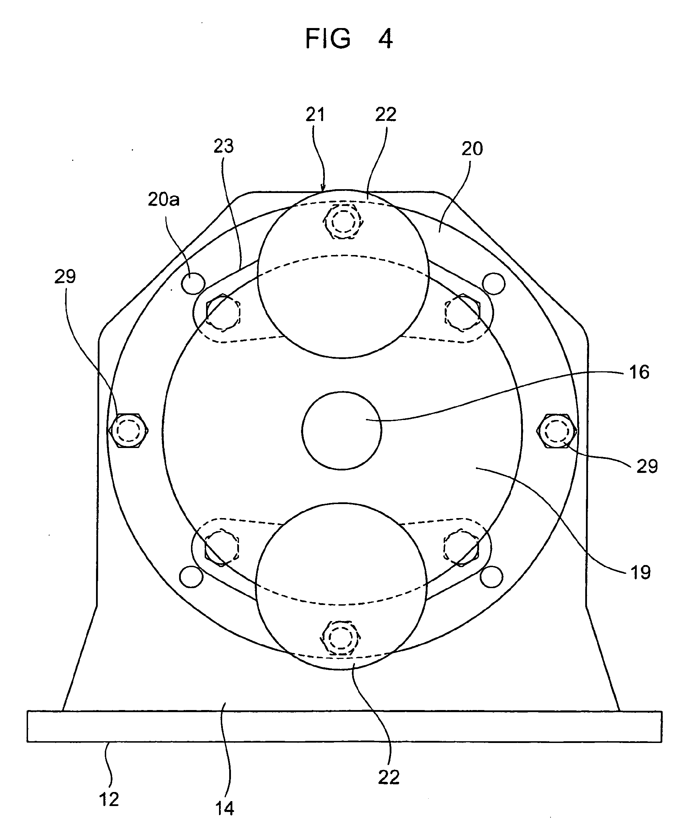

Fig. 3 is a sectional view showing the brake device 18 of Fig. 2, and Fig. 4 is a front view showing the brake device 18 of Fig. 2. Each brake unit 22 has a pair of brake pads 24 sandwiching the brake disc 19 therebetween, a brake spring 25 urging the brake pads 24 into contact with the brake disc 19, and an electromagnet 26 for separating the brake pads 24 away from the brake disk 19 against the brake spring 25.

The main shaft 16 is rotatably supported by the bearing stand 14 through the intermediation of a main shaft bearing 27. The brake mounting member 20 is rotatable relative to the bearing stand 14 about the rotation center of the rotary member 17. An auxiliary bearing 28 is provided between the brake mounting member 20 and the main shaft 16. Rolling bearings are used as the main shaft bearing 27 and the auxiliary bearing 28.

The rotation of the brake mounting member 20 with respect to the brake mounting member 20 is regulated by a plurality of fixing bolts 29 serving as fixing members. That is, the brake mounting member 20 is fixed to the bearing stand 14 with the fixing bolts 29.

The fixing bolts 29 penetrate the brake mounting member 20 for threaded attachment onto the bearing stand 14. The brake mounting member 20 is provided with a plurality of through-holes 20a through which the fixing bolts 29 are passed. Further, the bearing stand 14 is provided with a plurality of threaded holes 14a allowing threaded attachment of the fixing bolts 29.

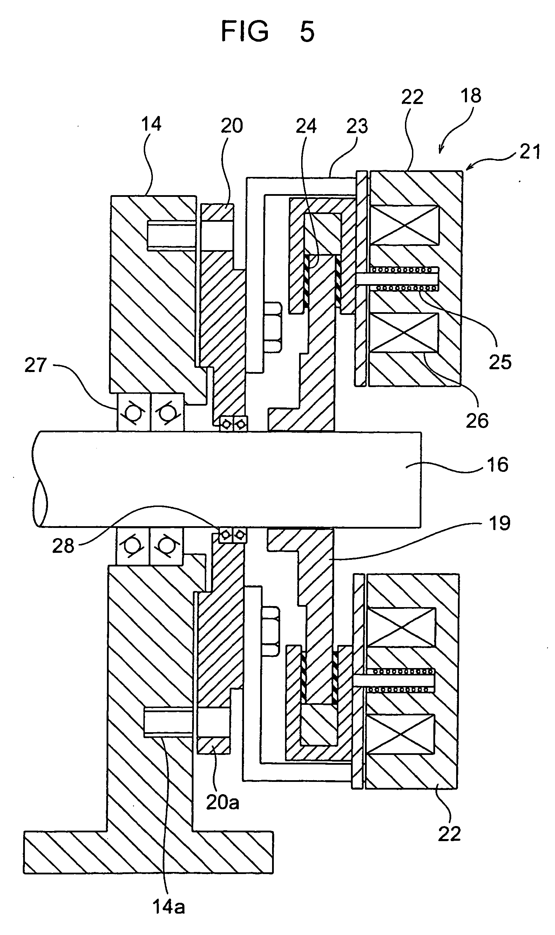

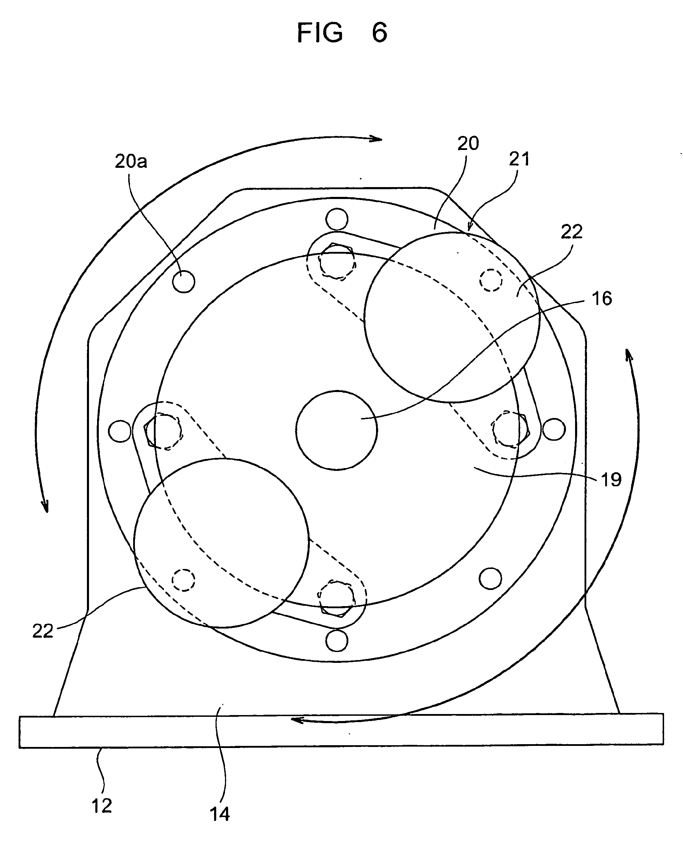

Fig. 5 is a sectional view showing a state in which the fixing bolts 29 of Fig. 3 are removed, and Fig. 6 is a front view showing a state in which the brake device main body 21 of Fig. 4 undergoes rotational displacement. By detaching the fixing bolts 29, the brake device 18 can be rotationally displaced about the rotation center of the rotary member 17.

Further, the brake mounting member 20 is provided with the through-holes 20a whose number is larger than that of the threaded holes 14a. The through-holes 20a are arranged at equal angular pitches around the rotation center of the rotary member 17. By selectively passing the fixing bolts 29 through the through-holes 20a, the mounting angle of the brake device main body 21 can be changed according to the installation conditions, etc. of the elevator hoisting machine 2.

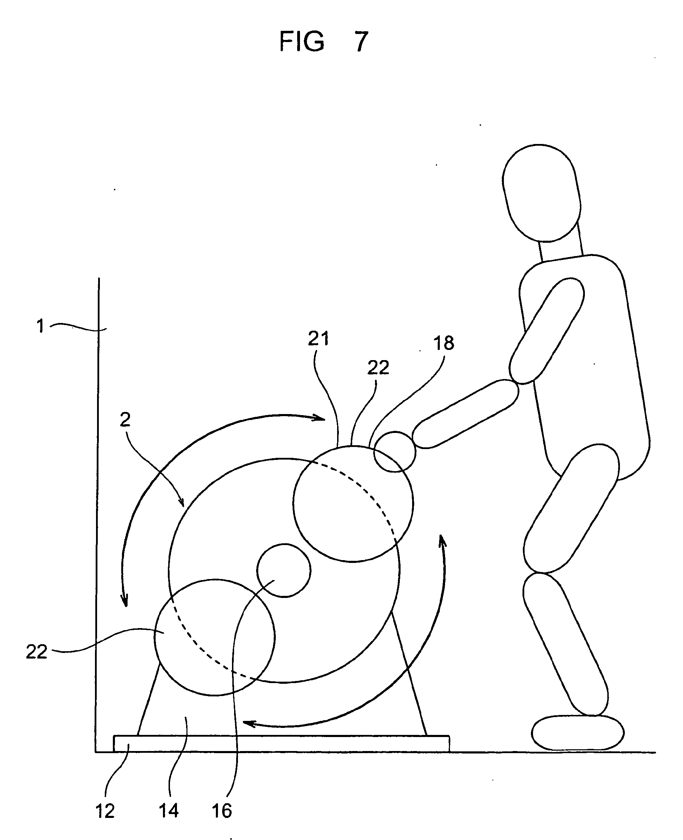

Fig. 7 is a front view showing how maintenance and inspection work is performed on the brake device 18 of Fig. 2. When the elevator hoisting machine 2 is provided at the bottom portion of the hoistway 1, the brake unit 22 is arranged on the floor surface or at a position near the hoistway wall, with the result that it is often impossible to secure a sufficient space for maintenance and inspection work around the brake unit 22.

In such a case, the fixing bolts 29 are detached to allow the brake mounting member 20 to rotate, thereby rotationally displacing the position of the brake unit 22. As a result, the brake unit 22 can be displaced to a position where maintenance and inspection work can be readily performed. Therefore, an improvement can be achieved in terms of the work efficiency of the maintenance and inspection work.

### Embodiment 2

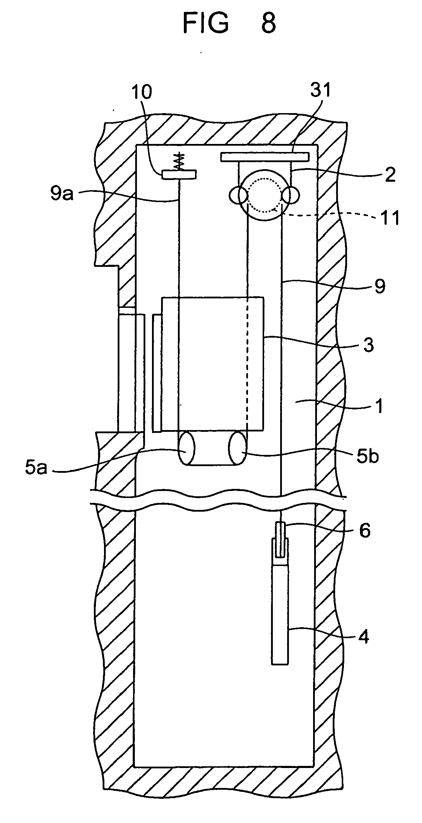

Next, Fig. 8 is a schematic sectional view showing an elevator apparatus (machine room-less elevator apparatus) according to Embodiment 2 of the present invention. In this example, the elevator hoisting machine 2 is provided at an upper portion (top portion) of the hoistway 1. The elevator hoisting machine 2 is supported by a support beam 31. The main ropes 9 are wound around the car suspension sheave 5a, the car suspension sheave 5b, the drive sheave 11, and the counterweight suspension sheave 6 in the stated order from the first end portion 9a side. Otherwise, Embodiment 2 is of the same construction as Embodiment 1.

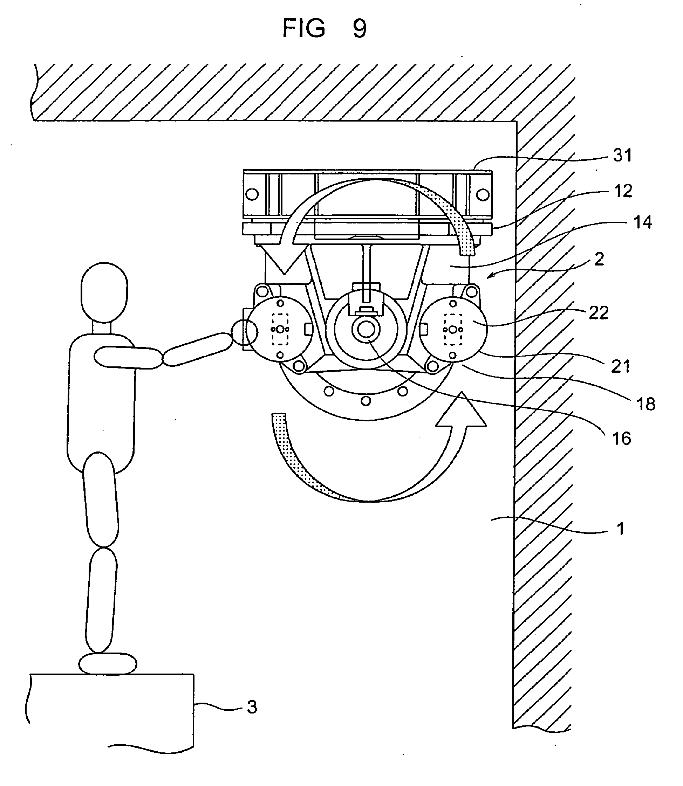

Fig. 9 is a front view showing how maintenance and inspection work is performed on the brake device 18 of Fig. 8. In the case where the elevator hoisting machine 2 is arranged at the top portion of the hoistway 1, the maintenance and inspection work on the brake unit 22 is performed, for example, from the top of the car 3. However, in the case where two brake units 22 are provided, when one of the brake units 22 is arranged at a position near the car 3 to ensure uniform application of the braking force, the other brake unit 22 is arranged at a position far from the car 3. This makes it difficult to perform maintenance and inspection work on the other brake unit 22.

In such a case, the fixing bolts 29 are detached to allow the brake mounting member 20 to rotate, thereby rotationally displacing the position of the brake unit 22. As a result, the brake unit 22 can be displaced to a position where maintenance and inspection work can be readily performed. Therefore, an improvement can be achieved in terms of the work efficiency of the maintenance and inspection work.

### Embodiment 3

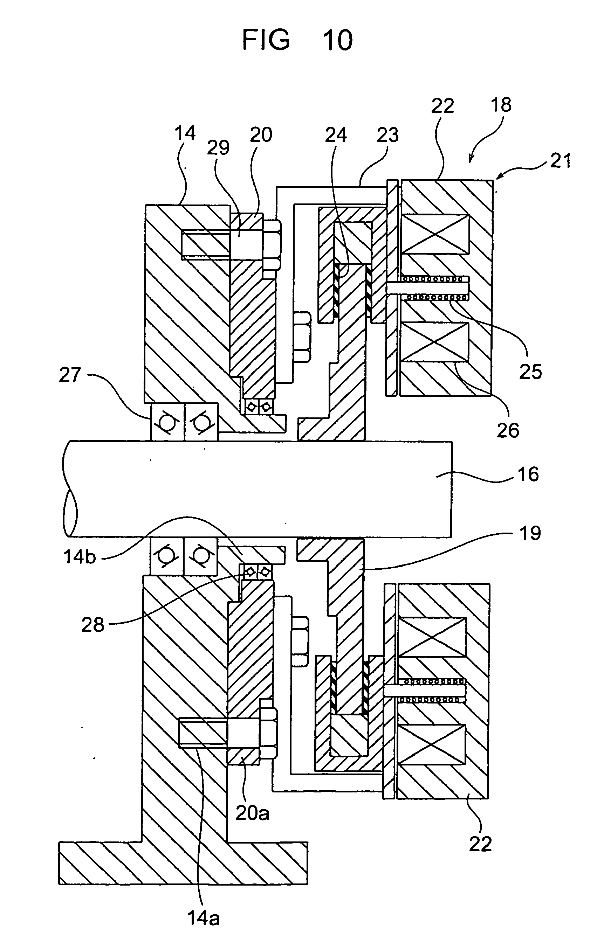

Next, Fig. 10 is a sectional view of a brake device according to Embodiment 3 of the present invention. Referring to the figure, the bearing stand 14 is provided with a cylindrical bearing support portion 14b that axially protrudes. The bearing support portion 14b surrounds the main shaft 16. The auxiliary bearing 28 intervenes between the outer peripheral surface of the bearing support portion 14b and the brake mounting member 20. Otherwise, Embodiment 3 is of the same construction as Embodiment 1.

As described above, the auxiliary bearing 28 may be provided between the bearing stand 14 and the brake mounting member 20, instead of between the main shaft 16 and the brake mounting member 20.

It is to be noted that while in the above-described example the fixing bolts 29 are described as the fixing members, this should not be construed restrictively. Pins with a detachment preventing lock, for example, may also be used as the fixing members.

Further, while it is preferred that the fixing members be arranged at equal angular pitches with respect to the rotation center of the rotary member, they may not be arranged, for example, at a position that cannot be accessed from the top of the car 3 as seen in Fig. 8. Accordingly, there is also no particular limitation as to the number of the fixing members.

Further, while in the above-described example the brake device main body 21 brakes the rotation of the brake disc 19 at two circumferential locations of the brake disc 19, such braking may be effected at one or three or more locations.

Furthermore, while the above-described example is directed to the case where the elevator hoisting machine 2 is arranged at the bottom or top portion of the hoistway 1, the elevator hoisting machine may be arranged at other positions of the hoistway or in a dedicated machine room. It is to be noted, however, that the present invention proves particularly effective when applied to an elevator hoisting machine arranged in the hoistway 1 with a limited working space.

Further, while in the above-described example the elevator hoisting machine 2 is arranged such that the rotary shaft of the drive sheave 11 becomes horizontal, the elevator hoisting machine may be arranged such that the rotary shaft of the drive sheave becomes vertical or substantially vertical.

Further, while the brake device mounted in the elevator hoisting machine has been described in the above-described example, the present invention is also applicable to a brake device mounted in other equipment.

## Claims

1. A brake device for an elevator hoisting machine, the brake device being adapted to brake rotation of a rotary member (17) that is rotatably supported to a hoisting machine main body (15), comprising:
a brake mounting member (20) that is rotatable about a rotation center of the rotary member (17);
a fixing member (29) for fixing the brake mounting member (20) to the hoisting machine main body (15) and regulating rotation of the brake mounting member (20); and
a brake device main body (21) mounted to the brake mounting member (20) and adapted to brake the rotation of the rotary member (17),
**characterized in that**
the brake device main body (21) is rotationally displaceable for inspection.

2. A brake device for an elevator hoisting machine according to claim 1, further comprising a brake disc (19) that rotates integrally with the rotary member (17),
wherein the brake device main body (21) has a pair of brake pads (24) sandwiching the brake disc (19) therebetween.

3. A brake device for an elevator hoisting machine according to claim 1, wherein the brake device main body (21) has a plurality of brake units (22) arranged symmetrically to each other about the rotation center of the rotary member (17).

4. A brake device for an elevator hoisting machine according to claim 1, wherein the fixing member (29) is a fixing bolt (29) that penetrates the brake mounting member (20) for threaded attachment onto the hoisting machine main body (15).

5. An elevator hoisting machine comprising:
a hoisting machine main body (15) including a motor portion (13);
a rotary member (17) including a drive sheave (11) and rotated by a drive force of the motor portion (13);
a brake device (18) having a brake device main body (21), the brake device main body (21) being capable of rotational displacement about a rotation center of the rotary member (17) with respect to the hoisting machine main body (15) and adapted to brake rotation of the rotary member (17); and
a fixing member (29) for regulating the rotational displacement of the brake device main body (21) with respect to the hoisting machine main body (15),
**characterized in that**
the brake device main body (21) is rotationally displaceable for inspection.

## Patentansprüche

1. Bremsvorrichtung für eine Aufzughebemaschine, wobei die Bremsvorrichtung dazu eingerichtet ist, die Rotation eines Rotationselementes (17) zu bremsen, das drehbar an einem Hebemaschinenhauptkörper (15) gelagert ist, umfassend:
ein Bremsenmontierelement (20), das um ein Rotationszentrum des Rotationselementes (17) drehbar ist;
ein Befestigungselement (29) zum Befestigen des Bremsenmontierelements (20) an dem Hebemaschinenhauptkörper (15) und zum Regeln der Rotation des Bremsenmontierelements (20); und
einen Bremsvorrichtungshauptkörper (21), der an dem Bremsenmontierelement (20) montiert und eingerichtet ist, die Rotation des Rotationselementes (17) zu bremsen,
**dadurch gekennzeichnet, dass**
der Bremsvorrichtungshauptkörper (21) für die Inspektion rotationsverschiebbar ist.

2. Bremsvorrichtung für eine Aufzughebemaschine nach Anspruch 1, ferner eine Bremsscheibe (19) umfassend, die sich integral mit dem Rotationselement (17) dreht, bei der der Bremsvorrichtungshauptkörper (21) zwei Bremsbeläge aufweist, die die Bremsscheibe (19) zwischen sich aufnehmen.

3. Bremsvorrichtung für eine Aufzughebemaschine nach Anspruch 1, bei der der Bremsvorrichtungshauptkörper (21) eine Vielzahl von Bremseinheiten (22) aufweist, die zueinander um das Rotationszentrum des Rotationselementes (17) symmetrisch angeordnet sind.

4. Bremsvorrichtung für eine Aufzughebemaschine nach Anspruch 1, bei der das Befestigungselement (29) ein Befestigungsbolzen (29) ist, der das Bremsenmontierelement (20) für eine Gewindeanbringung an dem Hebemaschinenhauptkörper (15) durchdringt.

5. Aufzughebemaschine, umfassend:
einen Hebemaschinenhauptkörper (15), der einen Motorabschnitt (13) umfasst;
ein Rotationselement (17), das eine Antriebsscheibe aufweist und das durch eine Antriebskraft des Motorabschnitts (13) gedreht wird;
eine Bremsvorrichtung (18), die einen Bremsvorrichtungshauptkörper (21) aufweist, wobei der Bremsvorrichtungshauptkörper (21) zur Rotationsverschiebung um ein Rotationszentrum des Rotationselementes (17) in Bezug auf den Hebemaschinenhauptkörper (15) geeignet ist und dazu eingerichtet ist, die Rotation des Rotationselementes (17) zu bremsen; und
ein Befestigungselement (29) zum Regeln der Rotationsverschiebung des Bremsvorrichtungshauptkörpers (21) in Bezug auf den Hebemaschinenhauptkörper (15),
**dadurch gekennzeichnet, dass**
der Bremsvorrichtungshauptkörper (21) für die Inspektion rotationsverschiebbar ist.

## Revendications

1. Dispositif de frein pour une machinerie d'élévateur, le dispositif de frein étant conçu pour freiner la rotation d'un élément rotatif (17) qui est supporté en rotation sur un corps principal de machine de levage (15), comprenant :
un élément de montage de frein (20) qui est rotatif autour d'un centre de rotation de l'élément rotatif (17) ;
un élément de fixation (29) pour fixer l'élément de montage de frein (20) au corps principal de machine de levage (15) et pour réguler la rotation de l'élément de montage de frein (20) ; et
un corps principal de dispositif de frein (21) monté sur l'élément de montage de frein (20) et conçu pour freiner la rotation de l'élément rotatif (17),
**caractérisé en ce que**
le corps principal de dispositif de frein (21) peut être déplacé en rotation pour inspection.

2. Dispositif de frein pour une machinerie d'élévateur selon la revendication 1, comprenant en outre un disque de frein (19) qui tourne d'un seul tenant avec l'élément rotatif (17),
dans lequel le corps principal de dispositif de frein (21) possède un couple de plaquettes de frein (24) prenant en sandwich le disque de frein (19) entre elles.

3. Dispositif de frein pour une machinerie d'élévateur selon la revendication 1, dans lequel le corps principal de dispositif de frein (21) possède une pluralité d'unités de frein (22) agencées de façon symétrique les unes par rapport aux autres autour du centre de rotation de l'élément rotatif (17).

4. Dispositif de frein pour une machinerie d'élévateur selon la revendication 1, dans lequel l'élément de fixation (29) est un boulon de fixation (29) qui pénètre dans l'élément de montage de frein (20) pour un attachement fileté sur le corps principal de machine de levage (15).

5. Machinerie d'élévateur comprenant :
un corps principal de machine de levage (15) comprenant une partie formant moteur (13) ;
un élément rotatif (17) comprenant une poulie d'entraînement (11) et mis en rotation par une force d'entraînement de la partie formant moteur (13) ;
un dispositif de frein (18) ayant un corps principal de dispositif de frein (21), le corps principal de dispositif de frein (21) étant susceptible d'un déplacement rotatif autour d'un centre de rotation de l'élément rotatif (17) par rapport au corps principal de machine de levage (15) et conçu pour freiner la rotation de l'élément rotatif (17) ; et
un élément de fixation (29) pour réguler le déplacement rotatif du corps principal de dispositif de frein (21) par rapport au corps principal de machine de levage (15),
**caractérisé en ce que**
le corps principal de dispositif de frein (21) peut être déplacé en rotation pour inspection.
